(19) Europäisches Patentamt / European Patent Office / Office européen des brevets

(11) **EP 2 451 183 A1**

(12) **EUROPEAN PATENT APPLICATION**

(43) Date of publication:
**09.05.2012 Bulletin 2012/19**

(51) Int Cl.:
*H04N 21/466* (2011.01)　　*H04N 7/16* (2011.01)

(21) Application number: **10190044.7**

(22) Date of filing: **04.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Nederlandse Organisatie voor
Toegepast
-Natuurwetenschappelijk Onderzoek TNO
2628 VK Delft (NL)**

(72) Inventors:
 • **Van Brandenburg, Ray
  2628 VK Delft (NL)**
 • **Van Deventer, Mattijs Oskar
  2628 VK Delft (NL)**
 • **Veugen, Peter Joannes Mathias
  2628 VK Delft (NL)**

(74) Representative: **Jansen, Cornelis Marinus
VEREENIGDE
Johan de Wittlaan 7
2517 JR Den Haag (NL)**

(54) **System for outputting a choice recommendation to users**

(57)　System for outputting a choice recommendation to one or more users based on earlier choices made by them, wherein at least one data record is made per choice per user, each data record including a representation of the user, a representation of the choice and a representation of any other user involved with that choice. The data record may include a representation of the user, a representation of the choice and a representation of no more than one other user involved with that choice, where more records are made when more other users are involved. The data record may include a representation of an environment linked to the choice, e.g. of a localization and/or hardware and/or software linked to the choice. The choice may relate to watching a movie, listening music and/or to eating and/or drinking. The recommendation may be represented by an advertisement.

FIG. 3

EP 2 451 183 A1

**Description**

The invention refers to a system comprising data processing means for outputting a (choice) recommendation to one or more users based on earlier choices made by them. Such a recommendation may be related to - not exclusively, however - to TV watching, which is seen as a good application example of such system.

In general, this kind of systems, including recommender systems, recommendation systems or recommendation engines form or work with a specific type of information filtering system technique that attempts to recommend information items (films, television, video on demand, music, books, news, images, web pages, etc.) that are likely to be of interest to the user. Typically, a recommender system compares a user profile to some reference characteristics, and seeks to predict the 'rating' that users would give to an item they had not yet considered. These characteristics may be derived from the information item (the content-based approach) or the user's social environment (the collaborative filtering approach).

Television - which is used in the following as an exemplary domain in which the present (kind of) system can be used - is a medium that is typically used by several people at the same time; think of family or friends who watch TV together at the bar at the end of the day. On the other hand, people are all different, everyone has his own preferences. Current technology (IPTV) makes it possible for several users to make and control their own personal profile with preferences. These profiles, however, do not take into account the fact that people may have different preferences and requirements when they are together in a group. When program recommendations are given for a father who watches TV together with his child, it makes no sense, for example, to allow for the father's preference for war movies. Also a married couple together would probably watch different movies than they would watch separately. There is therefore a need for a system that takes into account the idea that composite groups behave differently from each of its members separately.

US 2003/237093 discloses a system which is able to determine which persons are present in a room, and to establish a joint profile made up from the individual profiles of those persons. The present invention aims to take into account the influence of the group on the preferences of the individual persons, where the system known from US 2003/237093 is based on the individual personal preferences defined without the influence of group interaction/behaviour.

In order to make recommendations for a group of people a watching history of that group could be made, i.e. a record of what programs the persons of the group watched together in the past. An obvious way for doing this would be to create a profile for each group. If a group as a whole watches a program, this information is stored then in the watching history or profile of this group. If the group desires to watch TV together again at a later moment, the group's watching history/profile is used to make a recommendation for a new TV watching session. Such way of doing, however, has two great disadvantages. First, it is not flexible: when a certain subset of a group that previously watched together is watching together, a new profile has to be made, in which the information from the past cannot be included (since it now involves a subset and therefore a different group). For larger groups, the chance that the people in precisely the same composition will watch TV once more is very small. As a result, the situation arises that there are many profiles with unfortunately a very small and therefore nearly useless viewing history. A second disadvantage is that this system is not scalable. If the total number of users is N, then in the case of a group consisting of 2 persons $\binom{N}{2}$ profiles are needed; for a group of 3 persons $\binom{N}{3}$, and for a group of 4 persons $\binom{N}{4}$ etc.

According to the present invention a recommendation system is proposed for outputting a choice recommendation - either related to TV programs, DVDs etc. or to other items - to one or more users based on earlier choices made by them, wherein at least one data record is made per choice per user, each data record including a representation of the user, a representation of the choice and a representation of any other user involved with that choice. For the sake of data efficiency and scalability - as will be discussed below - it may be preferred that the data record includes a representation of the user, a representation of the choice and a representation of no more than one other user involved with that choice, where more records are made when more other users are involved.

Besides the users involved in the choice, the data record may include a representation of an environment linked to the choice. For instance, the data record may include a representation of a localization (e.g. room, geometric data etc.) linked to the choice and/or a representation of hardware and/or software linked to the choice. All those environmental information may be used in the process for outputting a choice recommendation to one or more users.

The choice (recommendation) may e.g. relate to watching a movie (including TV, DVD etc.), but also listening music, eating and/or drinking or other "activities" which can be done by a group of individual persons (users). One (commercially) interesting option is the use of the system according to the invention where the recommendation made by the system is represented by an advertisement.

The present invention also provides a method for outputting a choice recommendation, e.g. related to watching TV programs, to one or more users based on earlier choices made by them, wherein at least one data record is made per choice per user, each data record including a representation of the user, a representation of the choice and a representation of any other user involved with that choice.

In a preferred embodiment, the method according to the present invention comprises the steps of:

a. a request is made for a recommendation;
b. the users present are identified;
c. the watching history is retrieved of all those present;
d. on the basis of one or more weighing methods the watching events in the watching histories of the users present are provided with a weighing factor;
e. all weighed watching events are combined into one common watching history;
f. the combined watching history of weighed watching events is applied to a recommender system;
g. the recommender system makes a recommendation on the basis of the weighed watching events;
h. the recommendation is output.

The present invention additionally provides a computer program product for carrying out the method as defined above. A computer program product may comprise a set of computer executable instructions stored on a tangible data carrier, such as a CD or a DVD. The set of computer executable instructions, which allow a programmable computer to carry out the method as defined above, may also be available for downloading from a remote server, for example via the Internet.

Hereinafter the invention will be elucidated with reference to some figures.

Figures 1a-b    show two examples of a user profile with a multi-user or co-user component;

Figure 2        shows an exemplary data model of a user profile; shows an overview of in which way multi-user user profiles may be used for performing program recommendations; and

Figure 4        shows an exemplary protocol stack for synchronizing a local profile with a network profile.

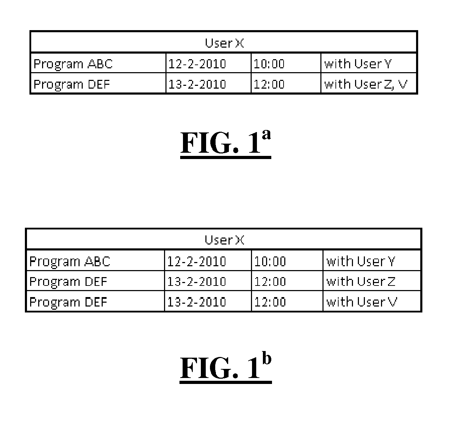

In figure 1 two examples are given of a user profile with a multi-user component, made for a user X. User X has watched two programs in the time elapsed. Therefore, two watching events have been registered: the first one for TV program ABC watched together with co-watcher Y, the second one for program DEF together with co-watchers Z and V. It is noted that for the identification and/or association of persons related to watching TV programs or other media content smart cards could be used as known *as such* from US 2003/237093.

In certain cases, it may be more convenient to store a viewing event (record) with two other users (seen in figure 1a) than storing two separate viewing events (records) at the same time point or occurrence (seen in figure 1b).

By storing the viewing-together information in the standard user profiles instead of in special group profiles, this information is much more easily used and of broader applicability. The information that user X watched the program DEF together with users Z and V can be used when Z in the future watches together only with Z or only with V, with Z and V, or even with Z, V and W. Naturally, the application of the recommendations offers the choice of what information if any is to be used.

Besides information on what program is watched, it may also be of interest to store other information per viewing event. An example of this is audio/video preferences. It may be the case when one views together with a large group of people, the sound level, e.g., becomes higher.

The viewing location may also be of interest. When two persons are watching at person A's home, the context (or environment) is different, and perhaps other choices are made than when they are watching at person B's home. Here audiovisual preferences may be applied but also the type of programs (person A may live in a student house, person B together with wife and children).

Current IP based TV architectures also support the concept of watching apart together: two people may be at different locations but watch a TV program "together." In this case, together means that they can communicate about what they are watching via an audio/video connection. For cases of this type, it is also convenient if the viewing events also support split-location viewing. For each of the co-viewers, therefore, a separate viewing location may be stored.

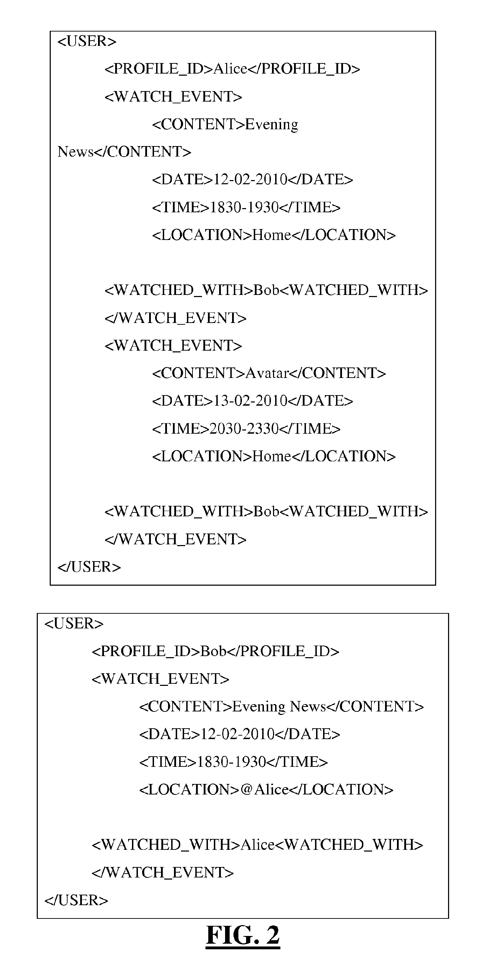

Figure 2 shows an exemplary data model of a user profile in these cases for a user A(lice) and B(ob) respectively.

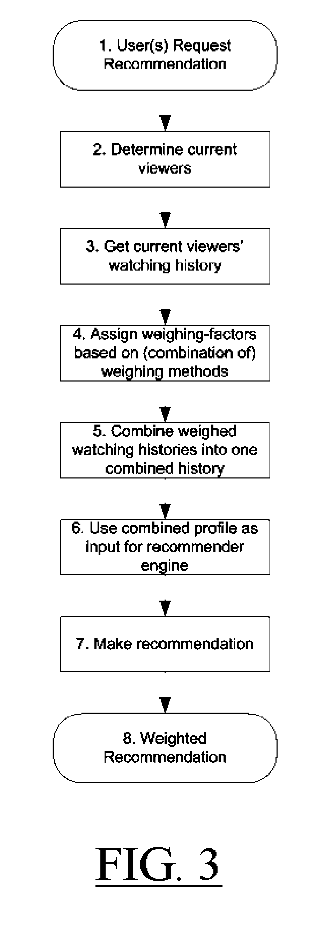

Figure 3 shows an overview of in which way multi-user user profiles may be used for performing program recommendations:

1. A request is made for a program recommendation
2. The present users are identified (if not done already). This may e.g. be performed as disclosed in an earlier patent of Microsoft®.
3. The watching history is retrieved of all users present.
4. On the basis of one of the four weighing methods below (or a combination of them) all watching events in the watching histories of the users present are provided with a weighing factor.
5. All weighed watching events are combined into one common watching history which is generated specifically for this situation.
6. The combined watching history of weighed watching events is applied to a recommender system (e.g. a collaborative filter).
7. The recommender system makes a recommendation on the basis of the weighed watching events.
8. The recommendation is output to e.g. the user(s).

The advantage of combining the weighed watching events into one combined watching history is that the above system can be used with all current recommender systems; the recommender itself does not see any difference between this combined multi-user watching history and a standard single-user watching history.

Below, four methods are presented, to be used for assigning weights to specific watching events, on the basis of the multi-user watching histories of the users present.

Binary multi-user Component

The most simple way to assign a weighing to the watching history is on the basis of a binary alone/together situation. In this case, during the making of the recommendation it is detected whether the present watching situation exists from one person or from several persons. In the case that one person is watching TV, for making the recommendation, either only watching events are considered where the user watches TV alone, or these watching events are weighed more heavily. In the case that several persons watch TV, the watching together watching events are weighed more heavily.

| Alice | | |
|---|---|---|
| 12-2-2010 20:00-20:30 | 20:00 News (news) | (alone) |
| 13-2-2010 21:30-23:30 | Spiderman (action movie) | Bob |
| 15-2-2010 20:00-23:00 | Casablanca (romantic movie) | Charlie |
| 21-2-2010 20:30-22:00 | Batman (action movie) | Bob, David |

| Bob | | |
|---|---|---|
| 11-2-2010 13:00-14:00 | Friends (comedy) | David |
| 12-2-2010 20:00-20:30 | Stock market (financial) | (alone) |
| 13-2-2010 21:30-23:30 | Spiderman (action movie) | Alice |
| 21-2-2010 20:30-22:00 | Batman (action movie) | Alice, David |

User overlap

A more specific way to weigh the watching history is to weigh more heavily watching events where one or several of the present watchers were also present. Suppose that e.g. Alice is going to watch TV together with Bob, then the watching events of Alice and Bob are weighed more heavily) in this case Spiderman and Batman). The watching event of Alice and Charlie (Casablanca) is not counted more heavily while the users do not correspond here.

| Alice | | |
|---|---|---|
| 12-2-2010 20:00-20:30 | 20:00 News (news) | (alone) |
| 13-2-2010 21:30-23:30 | Spiderman (action movie) | Bob |

(continued)

| Alice | | |
|---|---|---|
| 15-2-2010 20:00-23:00 | Casablanca (romantic movie) | Charlie |
| 21-2-2010 20:30-22:00 | Batman (action movie) | Bob, David |
| | | |
| Bob | | |
| 11-2-2010 13:00-14:00 | Friends (comedy) | David |
| 12-2-2010 20:00-20:30 | Stock market (financial) | (alone) |
| 13-2-2010 21:30-23:30 | Spiderman (action movie) | Alice |
| 21-2-2010 20:30-22:00 | Batman (action movie) | Alice, David |
| Paul | | |
| 11-2-2010 17:00-19:00 | The Big Bang Theory (comedy) | Bob |

Common friend

The "common friend" method can be used when two users do not have a common history, but when they do have common friends. "Friends" implies in this case that users A and B watched together never before but they watched earlier together with user C. In the above example Alice and Paul e.g. never watched together earlier; however they both watched together with Bob. In this case the watching events of both Alice and Paul which include Bob, would weigh more heavily (Spiderman, Batman and The Big Bang Theory).

Comparable relationship

The comparable relationship method makes use of the type of relations between several users, In this case the multi-user component has to have, beside information about with whom a watching event occurred, also information which relation the user has with this person. A possible source of this information could be e.g. social networks. Suppose that Alice is going to watch TV with her colleague Ethan with whom she never watched TV before. In this case watching events between Alice and Bob might going to weigh more heavily, as the relation between Alice and Bob is comparable with the relation between Alice and Ethan (both colleagues).

| Alice | | |
|---|---|---|
| 12-2-2010 20:00-20:30 | 20:00 News (news) | (alone) |
| 13-2-2010 21:30-23:30 | Spiderman (action movie) | Bob (colleague) |
| 15-2-2010 20:00-23:00 | Casablanca (romantic movie) | Charlie (in a relationship) |
| 21-2-2010 20:30-22:00 | Batman (action movie) | Bob (colleague), David (friend) |
| | | |
| Bob | | |
| 11-2-2010 13:00-14:00 | Friends (comedy) | David (friend) |
| 12-2-2010 20:00-20:30 | Stock market (financial) | (alone) |
| 13-2-2010 21:30-23:30 | Spiderman (action movie) | Alice (colleague) |
| 21-2-2010 20:30-22:00 | Batman (action movie) | Alice (colleague), David (friend) |

Finally, it is noted that when two users watched a program together, this watching event thus has to be stored into two profiles. This requires some form of synchronization. Dependent of where profile information is stored (locally/ centrally) this synchronization can have different forms.

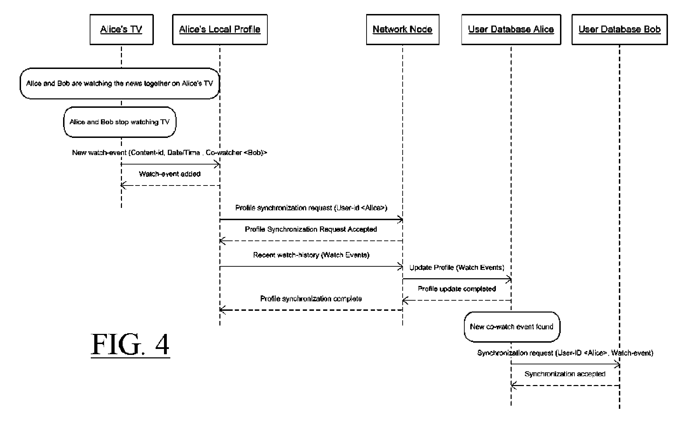

Figure 4 shows how this could work in the case of a local profile that is periodically synchronized with a network profile. A similar situation can take place in which all profiles are stored locally and, e.g., a synchronization action has to be performed with the Bob's TV or even with a mobile device (RFID tag, mobile phone).

A recommendation system may be constituted by a central unit, such as a suitably programmed personal computer, and user terminals. The central unit and the user terminals are suitably connected via the internet or other means. The central unit, which contains a processor configured for running a software program stored in a memory coupled to the processor, comprises a choice recommendation output unit configured for outputting recommendations to one or more users, which recommendations are based on earlier choices made by those users. The central unit is further configured for making at least one data record per choice and per user, each data record including at least a representation of the user, a representation of the choice and a representation of any other user involved with that choice. The data records thus made may also be stored in the memory mentioned above. The choice recommendation output unit may be at least partially constituted by a suitable software program or software program unit, which can be executed by the processor referred to above, but at least part of the choice recommendation output unit may be implemented in hardware. The user terminals, which may be constituted by mobile (that is, cellular) telephone units, comprise a keypad and/or a suitably configured touch-screen for entering selection information. The user terminals may, alternatively or additionally, be configured for speech recognition. In some embodiments, the user terminals may be absent and the central unit is connected to the television set and/or personal computer (or any combined viewing unit) of each user so as to gather user preference (that is, choice) information. Those skilled in the art will be able to design alternative embodiments of the recommendation system.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

**Claims**

1. Recommendation system comprising means for outputting a choice recommendation to one or more users based on earlier choices made by them, wherein at least one data record is made per choice per user, each data record including a representation of the user, a representation of the choice and a representation of any other user involved with that choice.

2. System according to claim 1, wherein the data record includes a representation of the user, a representation of the choice and a representation of no more than one other user involved with that choice, where more records are made when more other users are involved.

3. System according to any preceding claim, wherein the data record includes a representation of an environment linked to the choice.

4. System according to any preceding claim, wherein the data record includes a representation of a localization linked to the choice.

5. System according to any preceding claim, wherein the data record includes a representation of hardware and/or software linked to the choice.

6. System according to any preceding claim, wherein the choice relates to watching a movie and/or to listening to music.

7. System according to any preceding claim, wherein the choice relates to eating and/or drinking.

8. System according to any preceding claim, wherein the recommendation is represented by an advertisement.

9. Method for outputting a choice recommendation, e.g. related to watching TV programs, to one or more users based on earlier choices made by them, wherein at least one data record is made per choice per user, each data record including a representation of the user, a representation of the choice and a representation of any other user involved with that choice.

10. Method according to claim 9, comprising the steps of:

i. a request is made for a recommendation;

j. the users present are identified;

k. the watching history is retrieved of all those present;

l. on the basis of one or more weighing methods the watching events in the watching histories of the users present are provided with a weighing factor;

m. all weighed watching events are combined into one common watching history;

n. the combined watching history of weighed watching events is applied to a recommender system;

o. the recommender system makes a recommendation on the basis of the weighed watching events;

p. the recommendation is output.

11. Method according to claim 9 or 10, wherein one of said weighing methods includes assigning a weighing to the watching history on the basis of a binary alone/together situation, where it is detected whether the present watching situation exists from one person or from several persons and, in the case that one person is watching either only watching events are considered where the user watches TV alone, or these watching events are weighed more heavily; where, in the case that several persons watch TV, the watching together watching events are weighed more heavily.

12. Method according to claim 9 or 10, wherein one of said weighing methods includes weighing more heavily watching events where one or several of the present watchers were also present.

13. Method according to claim 9 or 10, wherein one of said weighing methods includes, in particular when users do not have a common watching history, to detect possible common friends and to base the weighing on having or not having common friends.

14. Method according to claim 9 or 10, wherein one of said weighing methods includes detecting and taking in account relation types between the relevant users, e.g. based on data derived from a social network server.

15. Method according to any of claims 9 to 14, implemented as a software program product which is preferably stored on a tangible carrier.

| User X | | | |
|---|---|---|---|
| Program ABC | 12-2-2010 | 10:00 | with User Y |
| Program DEF | 13-2-2010 | 12:00 | with User Z, V |

# FIG. 1<sup>a</sup>

| User X | | | |
|---|---|---|---|
| Program ABC | 12-2-2010 | 10:00 | with User Y |
| Program DEF | 13-2-2010 | 12:00 | with User Z |
| Program DEF | 13-2-2010 | 12:00 | with User V |

# FIG. 1<sup>b</sup>

```
<USER>
      <PROFILE_ID>Alice</PROFILE_ID>
      <WATCH_EVENT>
            <CONTENT>Evening
News</CONTENT>
            <DATE>12-02-2010</DATE>
            <TIME>1830-1930</TIME>
            <LOCATION>Home</LOCATION>


      <WATCHED_WITH>Bob<WATCHED_WITH>
      </WATCH_EVENT>
      <WATCH_EVENT>
            <CONTENT>Avatar</CONTENT>
            <DATE>13-02-2010</DATE>
            <TIME>2030-2330</TIME>
            <LOCATION>Home</LOCATION>


      <WATCHED_WITH>Bob<WATCHED_WITH>
      </WATCH_EVENT>
</USER>
```

```
<USER>
      <PROFILE_ID>Bob</PROFILE_ID>
      <WATCH_EVENT>
            <CONTENT>Evening News</CONTENT>
            <DATE>12-02-2010</DATE>
            <TIME>1830-1930</TIME>
            <LOCATION>@Alice</LOCATION>


      <WATCHED_WITH>Alice<WATCHED_WITH>
      </WATCH_EVENT>
</USER>
```

## FIG. 2

1. User(s) Request
Recommendation

▼

2. Determine current
viewers

▼

3. Get current viewers'
watching history

▼

4. Assign weighing-factors
based on (combination of)
weighing methods

▼

5. Combine weighed
watching histories into one
combined history

▼

6. Use combined profile as
input for recommender
engine

▼

7. Make recommendation

▼

8. Weighted
Recommendation

# FIG. 3

| Alice's TV | Alice's Local Profile | Network Node | User Database Alice | User Database Bob |

Alice and Bob are watching the news together on Alice's TV

Alice and Bob stop watching TV

New watch-event (Content-id, Date/Time , Co-watcher <Bob>)

Watch-event added

Profile synchronization request (User-id <Alice>)

Profile Synchronization Request Accepted

Recent watch-history (Watch Events)

Update Profile (Watch Events)

Profile update completed

Profile synchronization complete

New co-watch event found

Synchronization request (User-ID <Alice>, Watch-event)

Synchronization accepted

## FIG. 4

Europäisches
Patentamt

European
Patent Office

Office européen
des brevets

## EUROPEAN SEARCH REPORT

Application Number

EP 10 19 0044

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/194586 A1 (GUTTA SRINIVAS [US] ET AL) 19 December 2002 (2002-12-19) * abstract * * figure 2 * * paragraphs [0033] - [0040] * ----- | 1-15 | INV. H04N21/466 H04N7/16 |
| X | US 2006/282856 A1 (ERRICO JAMES H [US] ET AL) 14 December 2006 (2006-12-14) * abstract * * paragraph [0026] * * paragraphs [0057] - [0061] * * paragraphs [0098] - [0100] * ----- | 1-15 | |
| X | US 2010/185671 A1 (BURBA ALEXANDER [US] ET AL) 22 July 2010 (2010-07-22) * abstract * * paragraphs [0011], [0012] * ----- | 1-15 | |
| A | EP 1 841 219 A2 (FUJITSU LTD [JP]) 3 October 2007 (2007-10-03) * figure 15 * * paragraph [0067] * ----- | 1-15 | TECHNICAL FIELDS SEARCHED (IPC) H04N G06F |
| A | US 2006/212900 A1 (ISMAIL LABEEB K [US] ET AL) 21 September 2006 (2006-09-21) * abstract * * paragraphs [0127] - [0135] * ----- | 1-15 | |
| A | US 2004/098744 A1 (GUTTA SRINIVAS [US]) 20 May 2004 (2004-05-20) * paragraphs [0037] - [0039] * * figure 3 * ----- | 1-15 | |

The present search report has been drawn up for all claims

| Place of search | Date of completion of the search | Examiner |
|---|---|---|
| The Hague | 15 February 2011 | Naci, Suphi Umut |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 19 0044

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2011

| Patent document cited in search report | | Publication date | Patent family member(s) | | Publication date |
|---|---|---|---|---|---|
| US 2002194586 | A1 | 19-12-2002 | CN | 1672415 A | 21-09-2005 |
| | | | EP | 1444828 A2 | 11-08-2004 |
| | | | WO | 02104022 A2 | 27-12-2002 |
| | | | JP | 2004533193 T | 28-10-2004 |
| US 2006282856 | A1 | 14-12-2006 | NONE | | |
| US 2010185671 | A1 | 22-07-2010 | NONE | | |
| EP 1841219 | A2 | 03-10-2007 | CN | 101047827 A | 03-10-2007 |
| | | | JP | 2007274605 A | 18-10-2007 |
| | | | KR | 20070098408 A | 05-10-2007 |
| | | | US | 2007250866 A1 | 25-10-2007 |
| US 2006212900 | A1 | 21-09-2006 | NONE | | |
| US 2004098744 | A1 | 20-05-2004 | AU | 2003276551 A1 | 15-06-2004 |
| | | | CN | 1711773 A | 21-12-2005 |
| | | | EP | 1566059 A1 | 24-08-2005 |
| | | | WO | 2004047446 A1 | 03-06-2004 |
| | | | JP | 2006506886 T | 23-02-2006 |
| | | | KR | 20050086671 A | 30-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003237093 A